# EUROPÄISCHE PATENTSCHRIFT

(11) **EP 3 722 115 B1**
(45) Veröffentlichungstag und Bekanntmachung des Hinweises auf die Patenterteilung: **06.04.2022**
(21) Anmeldenummer: 20156072.9
(22) Anmeldetag: 07.02.2020
(51) Int. Cl.: B60C 25/14

(54) **REIFENFÜLLSTATION UND ZUGEHÖRIGES BETRIEBSVERFAHREN**
TIRE FILLING STATION AND CORRESPONDING OPERATING METHOD
STATION DE GONFLAGE DES PNEUS ET PROCÉDÉ DE FONCTIONNEMENT ASSOCIÉ

(30) Priorität: 10.04.2019 DE 102019109497
(43) Veröffentlichungstag der Anmeldung: 14.10.2020
(73) Patentinhaber: Hofmann Maschinen- und Anlagenbau GmbH, 67550 Worms (DE)
(72) Erfinder: Nolandt, Andreas, 67549 Worms (DE); Bork, Bernhard, 64579 Gernsheim (DE)
(74) Vertreter: Tergau & Walkenhorst Patentanwälte PartGmbB

(56) Entgegenhaltungen:
- EP-B1- 1 671 820
- WO-A2-2009/155503

## Beschreibung

Die Erfindung betrifft eine Reifenfüllstation zum Füllen eines auf einer Felge angeordneten Reifens mit einem unter Druck stehenden Gas, insbesondere Druckluft. Dier Erfindung betrifft ferner ein Verfahren zum Betreiben einer Reifenfüllstation.

Bei der automatischen Serienfertigung werden Kraftfahrzeugräder, sogenannte Kompletträder bestehend aus einer Radfelge und einem auf die Radfelge aufgebrachten Reifen, üblicherweise in einer in die Montagelinie integrierten automatischen Reifenfüllstation mit Druckluft befüllt. Die Felge mit montiertem Reifen wird hierbei auf eine geeignete Unterlageplatte gelegt, die das Rad beim Füllvorgang nach unten hin abdichtet. Auf die Reifenoberseite wird eine mit einem Füllring versehene Füllglocke aufgesetzt, die den Reifen und die Felge nach oben hin abdichtet, und durch welche die Reifenseitenwand beim Füllvorgang so weit nach unten gedrückt wird, dass zwischen Reifenwulst und Felge ein Ringspalt entsteht, durch den die in die Füllglocke geleitete Druckluft in den Reifen einströmen kann. Durch die eingeströmte Druckluft wird der Reifen mit großer Kraft gegen die Auflageplatte und die Füllglocke gepresst. Ist der Fülldruck erreicht, so wird die Füllglocke angehoben, wodurch sich die Reifenseitenwände in axialer Richtung auseinander bewegen, bis die Reifenwulste ihre jeweilige Sitzposition auf der Felge eingenommen haben.

Für einen solchen Füllvorgang muss der Füllring der Füllglocke eine Öffnung haben, deren Durchmesser einerseits groß genug ist, damit die Füllglocke nicht an die Felge anstößt, sondern über die Felge gestülpt werden kann. Der Durchmesser der Öffnung darf andererseits aber nicht so groß sein, dass die Füllglocke die obere Reifenseitenwand radial außerhalb ihres Hochpunktes kontaktiert. Die Füllglocke würde nämlich dann die Radialbewegung des Reifens behindern, was dazu führen könnte, dass der Reifenwulst nicht richtig in seinen Sitz springt. Ein Füllring eines bestimmten Durchmessers eignet sich somit nur für einen begrenzten Größenbereich von Kraftfahrzeugrädern.

Um den Größenbereich von in derselben Reifenfüllstation zu füllenden Reifen zu erweitern, weist eine aus EP 1 671 820 B1 bekannte Reifenfüllstation eine Karussell-Dreheinrichtung mit einer parallel zur Achslinie der Rad-/ Reifenanordnung, nämlich vertikal ausgerichteten Drehachse auf, an deren Umfang mehrere Füllringe unterschiedlichen Durchmessers angeordnet sind. Die Füllringe liegen allesamt in einer horizontalen Ebene. Durch die Anwahl einer geeigneten Drehstellung der Karussell-Dreheinrichtung wird ein Füllring mit geeignetem Durchmesser in einer quer zur Achslinie verlaufenden seitlichen Bewegung über den zu füllenden Reifen geschwenkt und bildet dann zusammen mit einer zugehörigen Füllplatte eine Füllglocke für den Füllvorgang.

Nachteilig an dieser Reifenfüllstation ist die relativ große seitliche Ausdehnung der Karussell-Dreheinrichtung, die einen großen Aufstellungsraum benötigt. Dies erschwert auch die Aufstellung von Schallschutzwänden um die Reifenfüllstation herum.

Weitere Reifenfüllstationen sind aus der WO2009/155503 bekannt, bei der unterschiedliche Füllringe horizontal aus einem Füllringmagazin herausbewegt werden.

Das Dokument DE102009046195B offenbart eine Reifenfüllstation mit verschiedenen Füllringen, die an einer horizontal verschieblichen Platte angeordnet sind und einen Hubtisch, der den zu befüllenden Reifen in Kontakt mit einem entsprechenden Füllring bringt.

Aufgabe der Erfindung ist, es eine kompakte Reifenfüllstation der angegebenen Art zu schaffen, die für einen großen Bereich verschiedener Reifengrößen geeignet und kostengünstig herstellbar ist. Die Reifenfüllstation soll eine hohe Füllgenauigkeit ermöglichen und zuverlässig und wartungsarm sein. Es ist weiterhin Aufgabe der Erfindung, ein vorteilhaftes Verfahren zum Betreiben einer Reifenfüllstation anzugeben.

Die Aufgabe wird erfindungsgemäß gelöst hinsichtlich der Reifenfüllstation durch die in Anspruch 1 angegebenen Merkmale und hinsichtlich des Verfahrens durch die in Anspruch 9 angegebenen Verfahrensschritte.

Vorteilhafte Ausgestaltungen der Reifenfüllstation sind in den abhängigen Ansprüchen 2 bis 8 angegeben.

Nach der Erfindung ist eine Reifenfüllstation vorgesehen mit
- einem zu einem Füllglockenoberteil hin bewegbaren Hubtisch für einen zu befüllenden Reifen, wobei das Füllglockenoberteil oberhalb des Hubtisches angeordnet ist, und
- einer um eine horizontale Drehachse drehbaren Karussell-Dreheinrichtung mit einer Mehrzahl von umfänglich an ihr angeordneten oder befestigbaren Füllringen, die jeweils durch entsprechende Drehung der Karussell-Dreheinrichtung zur Ausbildung einer Füllglocke in eine Füllposition zwischen dem Reifen und dem Füllglockenoberteil bewegbar sind.

Die Karussell-Dreheinrichtung wird auch als Revolver bezeichnet.

Das entsprechende Verfahren ist analog definiert.

Die mit der Erfindung erzielten Vorteile bestehen insbesondere darin, dass durch eine einfache Drehbewegung des Revolvers um eine horizontale Drehachse oberhalb des Hubtisches eine hohe Flexibilität hinsichtlich der verwendbaren Füllringe erreicht wird. Dies ermöglicht insbesondere ein besseres Handling bei Sondergrößen. Die Reifenfüllstation ist dabei in ihrer lateralen Ausdehnung besonders kompakt, bei zugleich guter Zugänglichkeit bei Wartungsarbeiten und dergleichen. Durch die zusätzliche Hinterlegung von RFID Daten an den Füllringen und deren Erfassung und Berücksichtigung bei der Anlagensteuerung lässt sich eine hohe betriebliche Sicherheit, ohne die Gefahr von Verwechslungen, bei zugleich optimierter Taktzeit erreichen.

Weitere Ausgestaltungen der Erfindung und damit erzielte Vorteile sind Gegenstand der anhängigen Ansprüche sowie der detaillierten Beschreibung.

Die Erfindung wird nachfolgend anhand eines Ausführungsbeispiels näher erläutert, das in den Zeichnungen dargestellt ist. Es zeigen:
- FIG. 1: eine perspektivische Ansicht einer Reifenfüllstation nach der Erfindung,
- FIG. 2: eine Seitenansicht der Reifenfüllstation gemäß FIG. 1,
- FIG. 3: eine erste perspektivische Ansicht einer Karussell-Dreheinrichtung der Reifenfüllstation gemäß Fig. 1,
- FIG. 4: eine zweite perspektivische Ansicht der Karussell-Dreheinrichtung gemäß FIG. 3, hier zusammen mit einem Füllglockenoberteil und weiteren Komponenten,
- FIG. 5: ein Detail aus FIG. 1 mit einer Verriegelung für die Karussell-Dreheinrichtung,
- FIG. 6: eine perspektivische Ansicht eines an der Karussell-Dreheinrichtung gemäß FIG. 3 befestigten Füllringhalters mit einem zugehörigen Füllring, und
- FIG. 7: eine perspektivische Detailansicht einer Füllglocke der Reifenfüllstation gemäß FIG. 1.

Gleiche oder funktionsgleiche Elemente sind in allen Figuren mit denselben Bezugszeichen versehen.

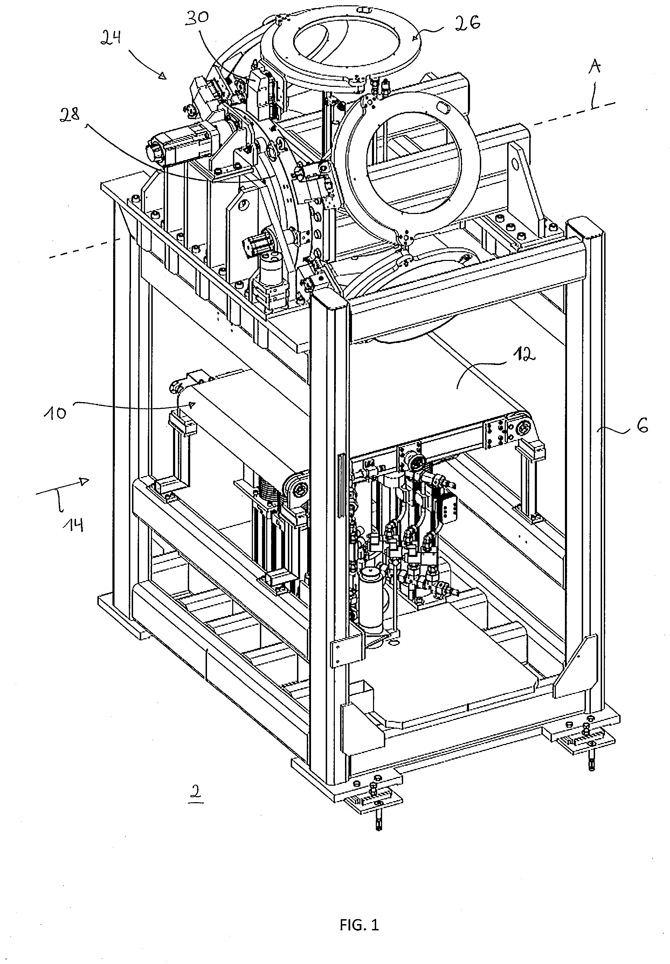

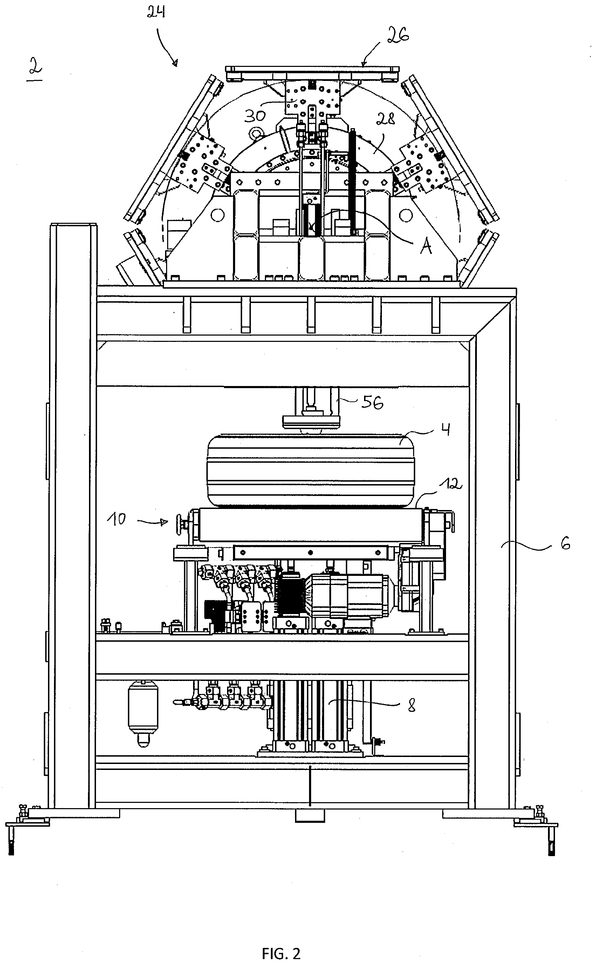

Die in FIG. 1 und 2 dargestellte Reifenfüllstation 2 dient zur automatisierten Befüllung eines Komplettrades 4, umfassend einen auf einer Felge aufgezogenen Reifen, mit einem unter Druck stehenden Gas, hier Druckluft, innerhalb einer industriellen Montagelinie.

Die Reifenfüllstation 2 umfasst einen Rahmen 6, in dem ein beispielsweise mittels eines Pneumatikzylinders 8 in seiner Höhe, also in vertikaler Richtung, verstellbarer Fülltisch oder Hubtisch 10 angeordnet ist. Während des Füllvorgangs liegt die jeweilige Rad-/ Reifenkombination, der Einfachheit halber bisweilen nur als Reifen bezeichnet, auf der horizontal ausgerichteten Auflagefläche 12 des Hubtisches 10 auf. Das Komplettrad 4 wird vor dem Füllvorgang durch eine nicht dargestellte Fördereinrichtung in Förderrichtung 14 in die Füllposition auf dem Hubtisch 10 überführt und anschließend weiter transportiert. Der Hubtisch 10 kann zu diesem Zweck selbst eine Fördereinrichtung, beispielswiese in Gestalt eines Förderbandes, beinhalten oder aufweisen.

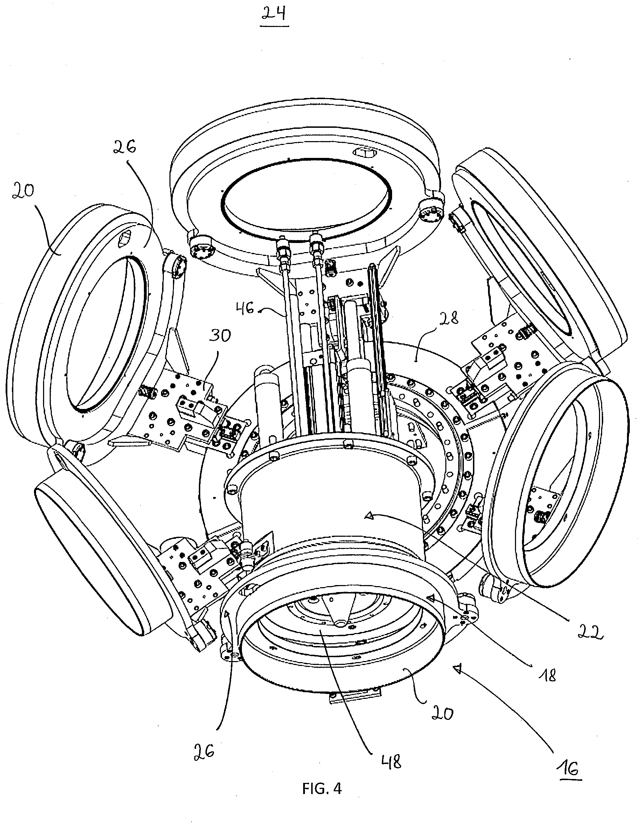

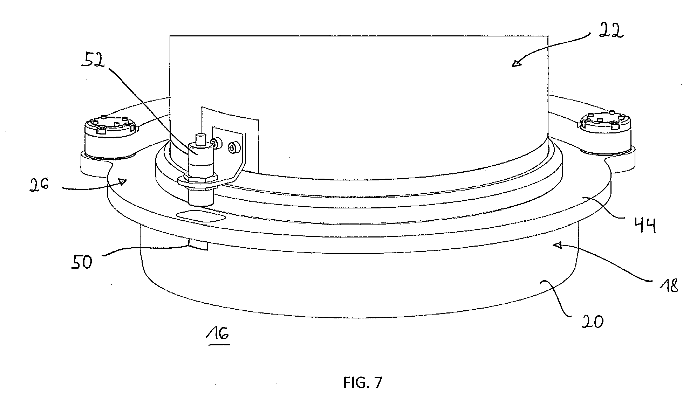

Zur Befüllung mit Druckluft wird der auf dem Hubtisch 10 liegende Reifen durch einen Hub des Hubtisches 10 nach oben gegen eine in FIG. 1 und 2 durch den Rahmen 6 verdeckte, jedoch in FIG. 4 und 7 gut sichtbare Füllglocke 16 gedrückt. Die Füllglocke 16 umfasst ein Füllglockenunterteil 18 mit einem an die Größe des Reifens angepassten Füllring 20, der den Reifenwulst während des Hubvorgangs über den kompletten Umfang hinweg zusammendrückt. In den so entstehenden Ringspalt wird über eine zugehörige Druckluft-Zuführung Druckluft in den Reifen zu dessen Befüllung eingeleitet. Eine Abdichtung der Anordnung erfolgt während des Füllvorgangs einerseits an der Unterseite des Reifens durch die Auflagefläche 12, andererseits an der Oberseite des Reifens durch das sich oben an das Füllglockenunterteil 18 mit dem Füllring 20 anschließende Füllglockenoberteil 22. Nach Beendigung des Füllvorgangs wird der Hubtisch 10 wieder nach unten in die Ausgangsposition bewegt, wobei sich der Ringspalt im Reifen automatisch verschließt.

Für eine Anpassung an unterschiedliche Reifengrößen wird eine Mehrzahl von Füllringen 20, hier im Beispiel sechs Stück, bereitgehalten, die an einem Füllringwechsler oder kurz Ringwechsler befestigt sind. Der Ringwechsler umfasst eine auch als Revolver bezeichnete Karussell-Dreheinrichtung 24, welche oberhalb des Hubtisches 10 an dem Rahmen 6 der Reifenfüllstation 2 befestigt ist. Die Karussell-Dreheinrichtung 24 weist eine senkrecht zur Achse des jeweiligen Reifens auf dem Hubtisch 10, nämlich horizontal ausgerichtete Drehachse A auf, so dass sich die achssymmetrisch in jeweils gleichem Abstand zur Drehachse A angeordneten Füllringhalter 26 mit den Füllringen 20 während einer Drehbewegung der Karussell-Dreheinrichtung 24 auf einer Kreislinie (siehe FIG. 2) oder gedachten Zylindermantelfläche um das stationär am Rahmen 6 befestigte Füllglockenoberteil 22 herum bewegen. Im vorliegenden Beispiel ist die Drehachse A der Karussell-Dreheinrichtung 24 zudem parallel zur Förderrichtung 14 der Reifen ausgerichtet, aber dies ist nicht zwingend. Die Füllringe 20 sind mittels Füllringhaltern 26 derart an der Karussell-Dreheinrichtung 24 befestigt, dass sie (in der seitlichen Draufsicht von FIG. 2) tangential zu der Kreislinie ausgerichtet sind. Dadurch ergibt sich im Beispiel ein im Wesentlichen sechseckförmiger Grundriss des Revolvers.

Selbstverständlich können bei entsprechender Größe des Revolvers auch mehr oder weniger als sechs Füllringe 20 an selbigem angebracht sein.

Auf diese Weise lässt sich durch geeignete Wahl der Drehstellung, hier im Beispiel in 60°-Schritten, der Karussell-Dreheinrichtung 24 der jeweils passende Füllring 20 in die Füllposition bringen, in der er mit parallel zur Reifenachse ausgerichteter Füllringachse zwischen dem Reifen und dem Füllglockenoberteil 22 angeordnet ist. Der jeweilige Füllringhalter 26 mit dem an ihm befestigten Füllring 20 bildet das Füllglockenunterteil 18, welches zusammen mit dem Füllglockenoberteil 22 die Füllglocke 16 bildet, sobald beide Teile aneinander anliegen.

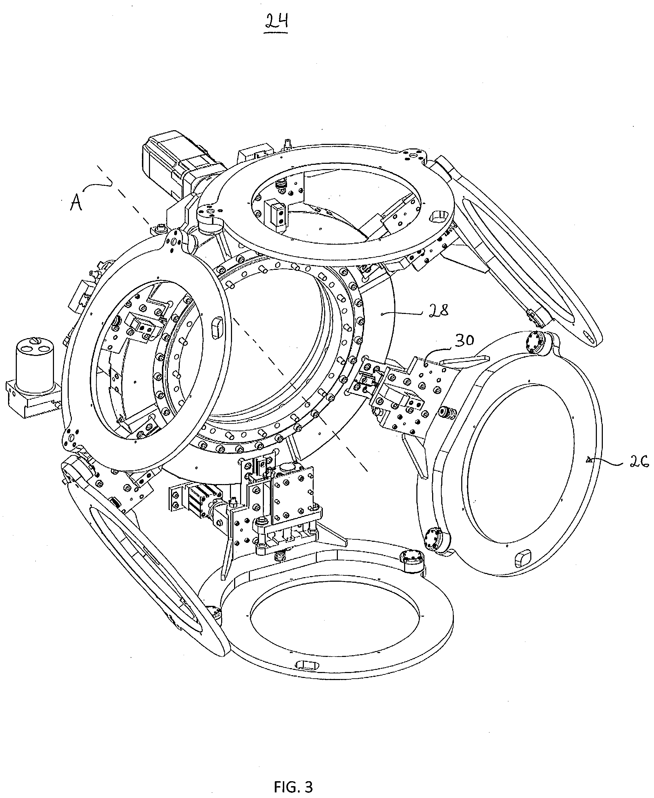

Konkret umfasst die Karussell-Dreheinrichtung gemäß FIG. 3 und 4 im dargestellten Beispiel eine senkrecht zur Drehachse A montierte Drehscheibe 28 mit seitlich abstehenden Armen 30, welche Füllringhalter 26 ausbilden oder tragen. Die Gesamtheit aus Drehscheibe 28 und Füllringhaltern 26 sowie daran befestigten Füllringen 20 liegt innerhalb eines im Wesentlichen schalenförmigen Umrisses. Der von der der Drehscheibe 28 gegenüberliegenden Seite von außen zugängliche Öffnungsbereich dieser Schale nimmt das Füllglockenoberteil 22 auf und umgibt es in der in FIG. 1 und 2 dargestellten Einbaulage. An der Drehscheibe 28 kann sich ein Zahnkranz befinden, der mit einem elektrischen Antrieb, beispielsweise einem Servoantrieb zur Einstellung der Drehstellung gekoppelt ist. Im Detail kann der Antriebsstrang auch anders ausgestaltet sein und z. B. verschiedene Getriebeelemente umfassen. Es ist auch eine Umsetzung einer von einem Linearantrieb verursachten Linearbewegung in eine Drehbewegung denkbar, etwa mittels einer Zahnstange. Der Revolver ist bevorzugt endlos drehbar.

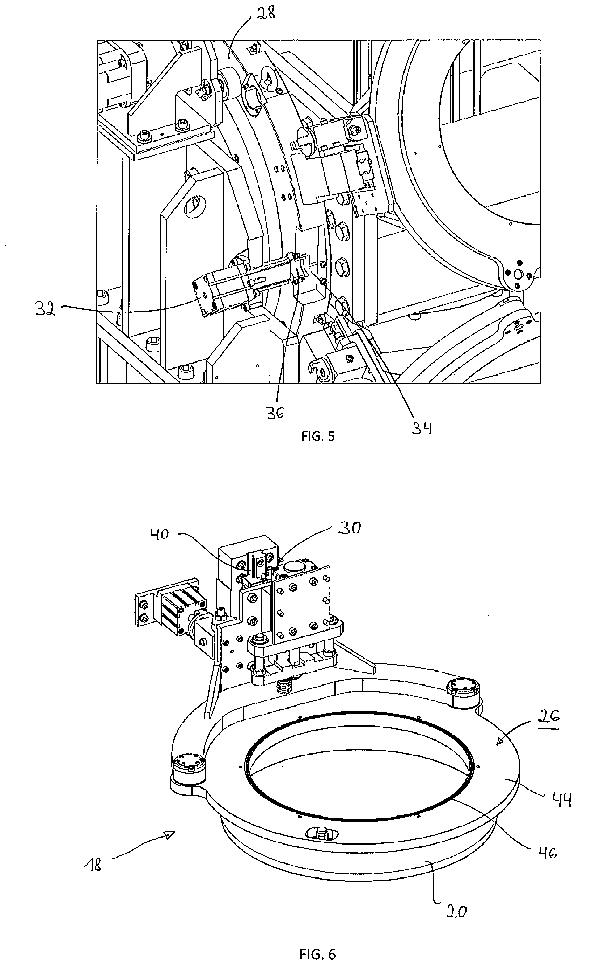

Um die Karussell-Drehvorrichtung 24 während des Füllvorgangs sicher in der gewünschten Drehstellung zu fixieren, kann der Antriebsstrang selbsthemmend ausgeführt sein. Zusätzlich oder alternativ kann eine Verriegelung vorgesehen sein, die während des Füllvorganges den Revolver blockiert. Eine in FIG. 5 dargestellte mögliche Lösung umfasst einen am Rahmen 6 angebrachten Pneumatikzylinder, auch Indexzylinder 32 genannt, an dessen Hubstange ein zum Eingriff in zugehörige Indexbohrungen 34 oder -öffnungen in der Drehscheibe 28 vorgesehenes Verriegelungselement, etwa ein Verriegelungsbolzen 36 angebracht ist. Durch den zumindest teilweise formschlüssigen Eingriff lässt sich die Drehstellung bei entsprechendem Zylinderhub des Indexzylinders 32 wie gewünscht blockieren.

Damit die Füllringhalter 26 während der Drehbewegung des Revolvers genügend Platz haben und nicht an dem Füllglockenoberteil 22 anschlagen oder hängenbleiben, ist in einer möglichen Variante eine beispielsweise durch einen Pneumatikzylinder oder durch einen anderen Aktor bewirkte Höhenverstellung für das Füllglockenoberteil 22 vorhanden. Das heißt, das Füllglockenoberteil 22 wird vor der Drehbewegung eine gewisse Wegstrecke vertikal nach oben bewegt, um den erforderlichen Bewegungsspielraum zu schaffen. Zur Einleitung des Füllvorganges wird das Füllglockenoberteil 22 wieder nach unten in die untere Endlage gefahren, in der es unter Ausbildung der Füllglocke 16 auf dem Füllringhalter 26 mit dem gewählten Füllring 20 aufliegt (siehe auch FIG. 7).

Alternativ oder zusätzlich kann zu dem genannten Zweck eine Verstellung des radialen Abstandes der Füllringhalter 26 zur Drehachse A des Revolvers vorgesehen sein. Dies kann gemäß FIG. 6 beispielsweise durch eine Schienenführung 40 (Gleitschienen) und zugehörige Pneumatikzylinder oder Servomotoren oder andere Aktoren verwirklicht sein, die jeweils in die die Füllringhalter 26 tragenden Arme 30 oder Aufhängungen integriert sind, oder durch eine entsprechende Verstellmechanik in den Füllringhaltern 26 selbst. Eine beispielsweise in die Verstellung integrierte oder unabhängig von ihr vorhandene Federmechanik mit einem entsprechenden Federweg bewerkstelligt den Ausgleich von Toleranzen.

Wie in FIG. 6 dargestellt, umfasst der jeweilige Füllringhalter 26 vorzugsweise einen seitlich an einem Arm 30 befestigten Haltering oder Trägerring 44, an dessen Unterseite der zugehörige Füllring 20 auswechselbar befestigt ist, beispielsweise mittels eines Bajonettverschlusses. Die Breite des Trägerrings 44 ist größer als die des Füllrings 20, um Füllringe 20 verschiedenen Durchmessers aufnehmen zu können. Der Trägerring 44 nimmt beispielsweise in einer Ringnut an der Oberseite oder am Innenrand einen nach oben abstehenden Dichtring 46 auf, so sich der von oben absenkende Dichtteller 48 (siehe FIG. 4), auch Dichtplatte genannt, des Füllglockenoberteils 22 während des Füllvorgangs spalt- und leckagefrei an den Trägerring 44 anlegen kann. Alternativ oder zusätzlich kann der Dichtteller 48 an seiner dem Trägerring 44 zugewandten Unterseite mit Dichtmitteln, insbesondere Dichtringen oder ringförmigen Dichtzonen, ausgestattet sein. Die (sphärische) Aufhängung am äußeren Rand des Trägerrings 44 am Arm 30 ist so gestaltet, dass sie die Ausbildung der Füllglocke 16 nicht behindert.

Die Füllringe 20 sind vorteilhafterweise mit mit einem beschreibbaren RFID Chip 50 (Transponder) ausgestattet. In diesem Chip sind wichtige Informationen wie z. B der Durchmesser des Füllrings 20, die zugordnete Felgengröße bzw. der Felgengrößenbereich und/oder andere kundenspezifische Daten hinterlegt. Ein gemäß FIG. 7 beispielsweise am Füllglockenoberteil 22 montiertes RFID Lesegerät 52 (Sensor oder Empfänger) liest die Daten aus und führt sie einer Steuerung für die Reifenfüllstation 2 zu. Auf diese Weise kann überprüft und sichergestellt werden, dass tatsächlich der zum jeweiligen Reifen passende Füllring 22 sich in der aktuellen Füllstellung befindet.

Anstelle der RFID-Technologie kann auch eine optische oder mechanisch ertastbare Codierung der Füllringe 22 mit entsprechender sensorischer Erfassung vorgesehen sein. Die RFID Codierung ist aber im Allgemeinen robuster und flexibler.

Alle Füllringe 20 können am Revolver taktzeitoptimiert angeordnet werden. Die Anordnung der Füllringe 20 kann über eine Revolverumdrehung in der Software der Steuerung angelernt werden. Das heißt, die Steuerung fährt nacheinander alle Plätze des Revolvers an und liest die Belegung über die RFID Daten aus und speichert sie zur Benutzung bei den nachfolgenden Steuervorgängen. Eine Revolverumdrehung nach Belegung genügt hierzu.

In FIG. 4 sind auch mehrere stangenartige Felgenniederhalter 56 erkennbar, die durch geeignete Ausnehmungen im Füllglockenoberteil 22 hindurchgeführt sind, und die durch zugehordnete Aktoren angehoben und abgesenkt werden können. Im abgesenkten Zustand drücken sie die Felge des auf dem Hubtisch 10 liegenden Komplettrades 4 nach unten. Sie ermöglichen auch eine taktile Vermessung der Felge.

Der bevorzugte Ablauf des Füllvorganges lässt sich wie wie folgt zusammenfassen:
Zunächst wird das zu befüllende Komplettrad 4 in eine der Reifenfüllstation 2 vorgelagerte Zentrierstation gefördert. Das Komplettrad 4 wird in der Zentrierstation beispielsweise hinsichtlich des Außendurchmessers des Reifens und des Innendurchmessers der Felge vermessen. Die Messdaten werden der Steuerung der Reifenfüllstation 2 zugeführt.

Das Komplettrad 4 wird nun in die Reifenfüllstation 2 gefördert und auf dessen in abgesenkter Position befindlichen Hubtisch 10 abgelegt. Die Steuerung ermittelt anhand der zuvor ermittelten oder einprogrammierten Belegung des Revolvers den passenden Füllring 20 und den zu seiner Auswahl erforderlichen Drehwinkel des Revolvers. Vor der Drehung muss der Verriegelungsbolzen 36 durch entsprechende Ansteuerung des Indexzylinders 32 aus der Lagesicherung des Revolvers herausgezogen werden. Der Antrieb für den Revolver bekommt nun von der Steuerung die Freigabe und dreht den ausgewählten Füllring 20 in die Füllposition zwischen dem Komplettrad 4 und dem Füllglockenoberteil 22. Anschließend wird die Drehstellung des Revolvers wieder durch den Verriegelungsbolzen 36 arretiert. Der Füllringhalter 26 mit dem Füllring 20 wird nun in der oben beschrieben Weise - durch Radialbewegung des Füllringhalters 26 nach innen hin zur Drehhachse A des Revolvers und/oder durch Absenkung des Füllglockenoberteils 22 - relativ zum Füllglockenoberteil 22 zu selbigem hinbewegt, so dass sich die komplette Füllglocke 26 ausbildet. Sicherheitshalber überprüft die Steuerung anhand der von RFID Lesegerät 52 ermittelten Daten, dass tatsächlich der gewünschte Füllring 22 sich in der Füllposition befindet.

Das Komplettrad 4 wird nun in der eingangs geschilderten Weise mit dem Hubtisch 10 nach oben an den eingestellten Füllring 20 in Position gefahren und mit Druckluft über die an das Füllglockenoberteil 22 angeschlossene Zufuhrleitung gefüllt.

Nach dem Füllvorgang wird der Hubtisch 10 wieder in die untere Endlage gefahren und das Komplettrad 4 aus der Reifenfüllstation 2 gefördert. Das Füllglockenoberteil 22 und das aus Füllringhalter 26 und Füllring 20 bestehende Füllglockenunterteil 18 werden wieder separiert, um Platz für den nächsten Drehvorgang zu schaffen.

Der beschriebene Vorgang wiederholt sich regelmäßig alle paar Sekunden, beispielsweise alle 5 bis 10 Sekunden.

### Bezugszeichenliste

- 2: Reifenfüllstation
- 4: Komplettrad / Reifen
- 6: Rahmen
- 8: Pneumatikzylinder
- 10: Hubtisch
- 12: Auflagefläche
- 14: Förderrichtung
- 16: Füllglocke
- 18: Füllglockenunterteil
- 20: Füllring
- 22: Füllglockenoberteil
- 24: Karussell-Dreheinrichtung (Revolver)
- 26: Füllringhalter
- 28: Drehscheibe
- 30: Arm
- 32: Indexzylinder
- 34: Indexbohrung
- 36: Verriegelungsbolzen
- 40: Schienenführung
- 44: Trägerring
- 46: Dichtring
- 48: Dichtteller
- 50: RFID Chip
- 52: RFID Lesegerät
- 56: Felgenniederhalter

- A: Drehachse

## Patentansprüche

1. Reifenfüllstation (2) mit
• einem zu einem Füllglockenoberteil (22) hin bewegbaren Hubtisch (10) für einen zu befüllenden Reifen, wobei das Füllglockenoberteil (22) oberhalb des Hubtisches (10) angeordnet ist, und
• einer um eine horizontale Drehachse (A) drehbaren Karussell-Dreheinrichtung (24) mit einer Mehrzahl von umfänglich an ihr befestigbaren Füllringen (20), die jeweils durch entsprechende Drehung der Karussell-Dreheinrichtung (24) zur Ausbildung einer Füllglocke (16) in eine Füllposition zwischen dem Reifen und dem Füllglockenoberteil (22) bewegbar sind.

2. Reifenfüllstation (2) nach Anspruch 1, wobei die Karussell-Dreheinrichtung (24) oberhalb des Hubtisches (10) angeordnet ist.

3. Reifenfüllstation (2) nach Anspruch 2, wobei die Karussell-Dreheinrichtung (24) das Füllglockenoberteil (22) zumindest teilweise umschließt.

4. Reifenfüllstation (2) nach einem der vorangehenden Ansprüche, wobei die Drehstellung der Karussell-Dreheinrichtung (24) durch eine Verriegelung blockierbar ist.

5. Reifenfüllstation (2) nach einem der vorangehenden Ansprüche, wobei die Karussell-Dreheinrichtung (24) eine Drehscheibe (28) mit seitlich abstehenden Armen (30) aufweist, welche jeweils einen Füllringhalter (26) tragen.

6. Reifenfüllstation (2) nach Anspruch 5, wobei der jeweilige Füllring (20) auswechselbar, vorzugsweise mittels Bajonettverschluss, am Füllringhalter (26) befestigt ist.

7. Reifenfüllstation (2) nach Anspruch 5 oder 6, wobei in der Füllposition der radiale Abstand zwischen dem Füllringhalter (26) und der Drehachse (A) der Karussell-Dreheinrichtung (24) durch einen Aktor veränderbar ist.

8. Reifenfüllstation (2) nach einem der vorangehenden Ansprüche, wobei der jeweilige Füllring (20) eine RFID Codierung aufweist, und wobei eine zugehörige Steuerung die Codierung sensorisch erfasst und bei der Steuerung der Reifenfüllstation (2) berücksichtigt.

9. Verfahren zum Betrieben einer Reifenfüllstation (2) mit einem zu einem Füllglockenoberteil (22) hin bewegbaren Hubtisch (10) für einen zu befüllenden Reifen, wobei das Füllglockenoberteil (22) oberhalb des Hubtisches (10) angeordnet ist, und wobei durch entsprechende Drehung einer um eine horizontale Drehachse (A) drehbaren Karussell-Dreheinrichtung (24) mit einer Mehrzahl von umfänglich an ihr befestigbaren Füllringen (20) einer der Füllringe (22) zur Ausbildung einer Füllglocke (16) in eine Füllposition zwischen dem Reifen und dem Füllglockenoberteil (22) bewegt wird.

## Claims

1. A tire inflation station (2), comprising
• a lifting table (10) movable towards an inflation bell upper part (22) for a tire to be inflated, wherein the inflation bell upper part (22) is arranged above the lifting table (10), and
• a carousel rotary device (24) rotatable about a horizontal axis of rotation (A) and having a plurality of inflation rings (20) that can be circumferentially attached thereto, each of which is movable into an inflation position between the tire and the inflation bell upper part (22) by corresponding rotation of the carousel rotary device (24) so as to form an inflation bell (16).

2. The tire inflation station (2) according to claim 1, wherein the carousel rotary device (24) is arranged above the lifting table (10).

3. The tire inflation station (2) according to claim 2, wherein the carousel rotary device (24) at least partially encloses the inflation bell upper part (22).

4. The tire inflation station (2) according to any one of the preceding claims, wherein the rotational position of the carousel rotary device (24) can be blocked by a locking device.

5. The tire inflation station (2) according to any one of the preceding claims, wherein the carousel rotary device (24) comprises a rotary disk (28) with laterally projecting arms (30), each of which carries an inflation ring holder (26).

6. The tire inflation station (2) according to claim 5, wherein the respective inflation ring (20) is exchangeably secured to the inflation ring holder (26), preferably by means of a bayonet lock.

7. The tire inflation station (2) according to claim 5 or 6, wherein in the inflation position, the radial distance between the inflation ring holder (26) and the axis of rotation (A) of the carousel rotary device (24) can be changed by an actuator.

8. The tire inflation station (2) according to any one of the preceding claims, wherein the respective inflation ring (20) has RFID coding, and wherein an associated control detects the coding by sensors and takes it into account when controlling the tire inflation station (2).

9. A method for operating a tire inflation station (2) with a lifting table (10) movable towards an inflation bell upper part (22) for a tire to be inflated, wherein the inflation bell upper part (22) is arranged above the lifting table (10) and wherein, by corresponding rotation of a carousel rotary device (24) rotatable about a horizontal axis of rotation (A) and having a plurality of inflation rings (20) that can be circumferentially attached thereto, one of the inflation rings (22) is moved into an inflation position between the tire and the inflation bell upper part (22) so as to form an inflation bell (16).

## Revendications

1. Station de gonflage des pneus (2) avec
• une table élévatrice (10) mobile vers une partie supérieure de cloche de gonflage (22) pour un pneu à gonfler, sachant que la partie supérieure de cloche de gonflage (22) est disposée au-dessus de la table élévatrice (10), et
• un système rotatif à carrousel (24) pouvant tourner autour d'un axe de rotation (A) horizontal avec une pluralité d'anneaux de gonflage (20) fixables complètement sur celui-ci, qui peuvent être déplacés dans une position de gonflage entre le pneu et la partie supérieure de cloche de gonflage (22) pour constituer une cloche de gonflage (16) par rotation correspondante du système rotatif à carrousel.

2. Station de gonflage des pneus (2) selon la revendication 1, sachant que le système rotatif à carrousel (24) est disposé au-dessus de la table élévatrice (10).

3. Station de gonflage des pneus (2) selon la revendication 2, sachant que le système rotatif à carrousel (24) entoure au moins en partie la partie supérieure de cloche de gonflage (22).

4. Station de gonflage des pneus (2) selon l'une quelconque des revendications précédentes, sachant que la position de rotation du système rotatif à carrousel (24) peut être bloquée par un verrouillage.

5. Station de gonflage des pneus (2) selon l'une quelconque des revendications précédentes, sachant que le système rotatif à carrousel (24) comporte un disque rotatif (28) avec des bras (30) ressortant latéralement, lesquels portent respectivement un support d'anneau de gonflage (26).

6. Station de gonflage des pneus (2) selon la revendication 5, sachant que l'anneau de gonflage (20) respectif est fixé sur le support d'anneau de gonflage (26), pouvant être changé, de préférence au moyen d'une fermeture à baïonnette.

7. Station de gonflage des pneus (2) selon la revendication 5 ou 6, sachant que dans la position de gonflage, la distance radiale entre le support d' anneau de gonflage (26) et l'axe de rotation (A) du système rotatif à carrousel (24) peut être modifiée par un actionneur.

8. Station de gonflage des pneus (2) selon l'une quelconque des revendications précédentes, sachant que l'anneau de gonflage (20) respectif comporte une codification d'identification sans contact (RFID) et sachant qu'une commande associée saisit par détection la codification et la prend en considération lors de la commande de la station de gonflage des pneus (2).

9. Procédé destiné à faire fonctionner une station de gonflage des pneus (2) avec une table élévatrice (10) mobile vers une partie supérieure de cloche de gonflage (22) pour un pneu à gonfler, sachant que la partie supérieure de cloche de gonflage(22) est disposée au-dessus de la table élévatrice (10) et sachant que par rotation correspondante d'un système rotatif à carrousel (24) pouvant tourner autour d'un axe de rotation (A) horizontal avec une pluralité d' anneaux de gonflage (20) fixables complètement sur celui-ci, un des anneaux de gonflage (22) est déplacé pour constituer une cloche de gonflage (16) dans une position de gonflage entre le pneu et la partie supérieure de cloche de gonflage (22).
